# EUROPEAN PATENT APPLICATION

(11) **EP 2 234 382 A1**
(43) Date of publication of application: **29.09.2010**
(21) Application number: 10001650.0
(22) Date of filing: 18.02.2010
(51) Int. Cl.: H04N 1/00

(54) **System and method for receiving image print order**

(30) Priority: 25.03.2009 JP 2009074254
(71) Applicant: NORITSU KOKI CO., LTD., Wakayama-shi, Wakayama (JP)
(72) Inventor: Kitaguchi, Hirofumi, Wakayama-shi Wakayama (JP)
(74) Representative: Lemcke, Brommer & Partner

(57) **Abstract**

An image print order receiving system has an image print order receiving apparatus (S) for receiving an order for printing images. The system includes a data obtaining section (11) for obtaining image data for use in printing images, a notice print making section (31, P) for printing, in a printing medium, a notice print (50) including thumbnail images of at least some of the image data and access information for accessing the image print order receiving apparatus and an image print order receiving section (43) provided in the image print order receiving apparatus (S), the image print order receiving section being configured to receive an access by a user who has received said notice print manually forwarded thereto and to obtain order information of the image prints.

## Description

### Background of the Invention

### Field of the Invention

The present invention relates to a technique for receiving a customer's order for image prints from image data stored on an image server.

### Description of the Related Art

Conventionally, an image sharing service is provided for allowing viewing by a specified or a non-specified person of image data stored and registered at a server installed in a network such as the internet. With such service, a user can view the images on the server by establishing connection to the server via the network. As an additional service related thereto, some businesses provide a service of printing viewed images and delivering them by mail or the like to the requester (viewer).

The art has proposed also a method of receiving photo printing orders. In this method, digital images are stored in image storing means and these digital images are "posted" in an ordering page constructed on a WEB server. Then, thumbnail images of the digital images and an electronic mail including an URL (Uniform Recourse Locator) of the ordering page are transmitted to the user, so that the service provider may receive a user's order for photo prints (corresponding to "image prints" in the present invention) through the ordering page (see Japanese Patent Application "Kokai" No. 2003-6483).

According to the technique disclosed in Japanese Patent Application "Kokai" No. 2003-6483, digital images are stored in image storing means and to a registered owner of an e-mail address (user), thumbnail images of the digital images stored in the image storing means and an electronic mail showing the URL of the WEB server are transmitted to the user. Upon receipt of this e-mail, the user makes an access with the URL to the ordering page built on the WBE server. With this, the digital images will be displayed in the ordering page, so that with viewing these displayed digital images, the user can place an order for photo prints thereof. Further, since the e-mail can be caused to contain a password for viewing the digital images, the technique allows only certain specified person(s) to view the digital images.

However, for using the conventional image sharing service, information for specifying the server, e.g. an URL, is needed. Further, in the case of the service allowing restricted viewing by a specified user(s) only, an ID, a password or the like for user authentication is needed. Therefore, it is needed to forward these information to the user.

Further, in the case of the technique disclosed in Japanese Patent Application "Kokai" No. 2003-6483, an URL, an authenticating password are forwarded by an e-mail, the above-described problems with the image sharing service can be solved. So, this is useful for a user who can receive an e-mail. However, since the media for forwarding the information is an e-mail, the advantage of this method can be enjoyed only by those customers having an environment allowing use of e-mails. Moreover, since e-mail involve such risks as eavesdropping, falsification, care must be taken in forwarding the password.

In view of the above-described problem, the primary object of the present invention is to provide an image print order receiving technique that facilitates reception of an image print order.

### Summary of the Invention

For accomplishing the above-noted object, according to the present invention, an image print order receiving system having an image print order receiving apparatus for receiving an order for printing images, the system comprising:
a data obtaining section for obtaining image data for use in printing images;
a notice print making section for printing, in a printing medium, a notice print including thumbnail images of at least some of the image data and access information for accessing the image print order receiving apparatus; and
an image print order receiving section provided in the image print order receiving apparatus, the image print order receiving section being configured to receive an access by a user who has received said notice print manually forwarded thereto and to obtain order information of the image prints.

With the above-described construction, the date obtaining section obtains image data for use in printing images. And, at the notice print making section, a print called herein as "a notice print" is made. This "notice print" as used herein is an article or an object printed with thumbnail images of at least some of the image data and access information for accessing the image print order receiving apparatus. This notice print is forwarded or delivered by manual means such as a postal mailing service to the user who is expected to place an image print order. Upon receipt of this notice print, the user can view the thumbnail images contained in the notice print to determine need or no need for image printing. If the user desires printing of an image therein, the user can make an access to the image print order receiving apparatus using the access information. Further, the image print order receiving apparatus receives the access from this order and obtains the order for image print.

As described above, since the construction employs, as an information forwarding means, a notice print printed with thumbnail images and access information, the opportunity for placing an order for image printing can be afforded also to those users having no access to the internet.

According to one preferred embodiment of the image print order receiving system of the present invention, said printing medium comprises a pressure-bonded postcard. The "pressure-bonded postcard" is a postcard that is sized, when folded, to correspond to the standard postcard and that is mailed with its folded inner half faces being detachably bonded and sealed together. For the bonding of this pressure-bonded postcard, a special machine or system is required. So, once the bonded faces are released from each other, re-bonding thereof becomes difficult. This is an advantageous feature of the pressure-bonded postcard. Therefore, with this construction, by printing the thumbnail images on the inner face as the bonded face, privacy can be protected. Further, by printing the access information in the inner face, it is possible to prevent surreptitious viewing and access by an unauthorized person or entity to the image print order receiving apparatus. This is advantageous since there is no concern about surreptitious viewing even if a user ID, a password or the like are printed as the access information.

If the printing medium to be printed with the notice print is a conventional postcard or a pressure-bonded postcard, it is possible to write or print, on this printing medium, the information of the recipient user, i.e. mailing address. In such case, preferably, a mailing address is automatically printed based on e.g. mailing address data. This is advantageous also from the view point of labor reduction and prevention of erroneous record entry. Therefore, according to one preferred embodiment of the image print order receiving system of the present invention, said data obtaining section further obtains user information including information of the delivery address of the user expected to place an image print order, and said notice print making section prints the delivery address of the user. Needless to say, this arrangement can be used also when the printing medium to be printed with the notice print is different from a printing medium to be printed with the address.

According to a further preferred embodiment of the image print order receiving system of the present invention, the system further comprises an image printing section for making the image prints, based on said order information and said image data. With this construction, based on the image data obtained by the data obtaining section and the order information obtained by the image print order receiving section, image prints can be made. Therefore, the labor can be reduced.

The technical features of the image print order receiving system of the invention can be applied also to an image print order receiving method constructed similarly thereto. For instance, an image print order receiving method for receiving an order for printing images via a WEB page, the method comprising:
an image data obtaining step for obtaining image data for use in printing images;
a notice print making step for printing, in a printing medium, notice print including thumbnail images of at least some of the image data and access information for making an access to the WEB page; and
an image print order receiving step for receiving an access by a user who has received said notice print manually delivered thereto and obtaining order information of the image prints.

Needless to say, the additional characterizing feature of the image print order receiving system described above can be applied to this image print order receiving method.

### Brief Description of the Drawings

[Fig. 1] is a system construction diagram of an image print order receiving system according to the present invention,
[Fig. 2] is a functional block diagram of the image print order receiving system according to the present invention,
[Fig. 3] shows an example of a notice print used in the present invention,
[Fig. 4] shows an example of a notice print used in the present invention,
[Fig. 5] is a flowchart illustrating the flow of process for making a notice print in the present invention,
[Fig. 6] shows an example of a template used in making index print data in the present invention,
[Fig. 7] is a flowchart illustrating the flow of process for processing an image print order,
[Fig. 8] shows an example of a thumbnail image displaying screen used at the time of image print order in the present invention,
[Fig. 9] shows an example of an image print order inputting screen used at the time of image print order in the present invention, and
[Fig. 10] is a flowchart illustrating the flow of processing by the image order receiving system according to the present invention.

### Detailed Description of the Preferred Embodiments

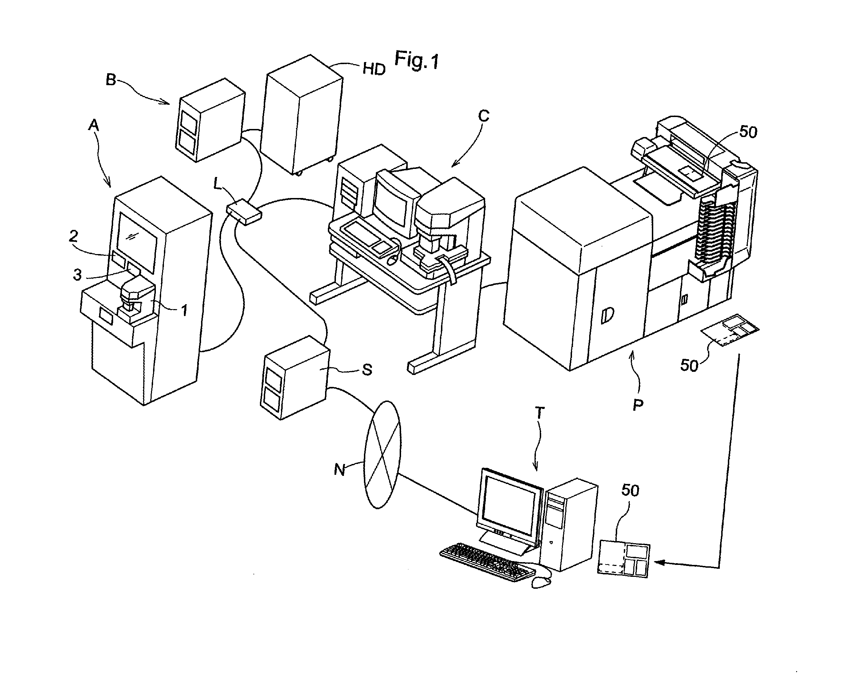

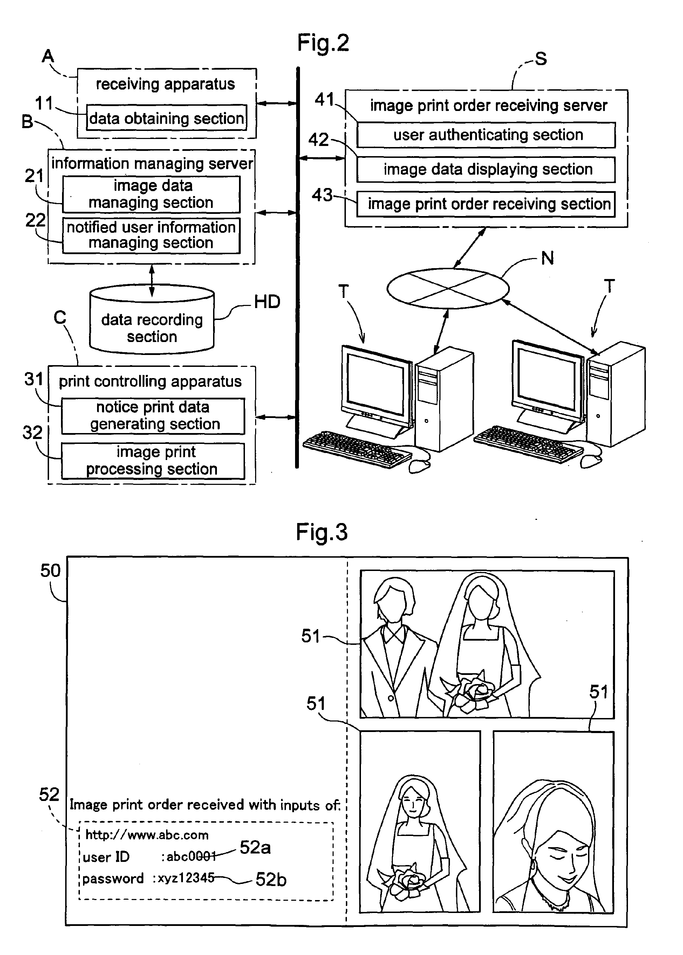

Next, preferred embodiments of the present invention will be described with reference to the accompanying drawings. Figs. 1 and 2 are respectively a system construction diagram and a functional block diagram of an image print order receiving system according to the present invention. As can be clearly understood from these figures, the image print order receiving system according to the instant embodiment includes a receiving apparatus A for receiving image data or the like for use in image printing, an information managing server B for recording/managing the image data or the like received by the receiving apparatus A, a print controlling apparatus C for controlling a printer P used for image printing, etc., and an order receiving server S for processing reception of an order for image printing. Incidentally, the image print order receiving server S functions as an "image print order receiving apparatus" of the present invention.

In this embodiment, the receiving apparatus A, the information managing server B, the print controlling apparatus C and the image print order receiving server S are installed at an image printing business firm or shop and these respective components are interconnected via a local network L comprising e.g. a LAN (Local Area Network), etc. The image print order receiving server S is connected also to a wide area network N such as the internet. In this, it is preferred that at least the information managing server B be protected by e.g. a firewall to prevent direct access from the wide area network N.

The receiving apparatus A, the information managing server B, the print controlling apparatus C and the image print order receiving server S are constructed of general-purpose computers and respective functional sections to be described later are constructed of software and/or hardware.

### [Receiving Apparatus]

The receiving apparatus A receives digital image data (to be referred to as "image data" hereinafter) as data for use in image printing from an owner of the image data. The receiving apparatus A has another function of notifying the user ("notified user" hereinafter) of information to the effect that an image printing order can be received. To this end, the receiving apparatus A includes a data obtaining section 11 for obtaining the image data from the image data owner and information relating to the notified user ("notified user information" hereinafter).

The data obtaining section 11 has the function of receiving image data from the owner of the image data as described above. Therefore, the receiving apparatus A includes a film scanner 1 for generating image data from a film, a disc drive 2 for reading data from a disc type recording medium such as a CD-R disc, and a connector 3 for reading data from a semiconductor type recording medium comprised of e.g. a flash memory. The data obtaining section 11 obtains the image data or the like via these components.

Further, the data obtaining section 11 obtains the notified user information in addition to image data. The "notified user" refers to a user to whom the notice of receiving image print order is to be sent as described above. For instance, if the image data is a photograph of a wedding ceremony or an alumni reunion meeting, its attendee becomes a notified user. As the notified user information, at least the name and the address of the notified user are needed. The owner of the image data inputs the notified user information recorded in a semiconductor type recording medium, a CD-R, or the like via the data obtaining section 11. Alternatively, the user may directly input the information to the data obtaining section 11, with using a keyboard (not shown).

Incidentally, the data obtaining section 11 effects authentication of the owner, prior to obtaining the above-described data and specifies ID information of the owner ("owner ID" hereinafter). In this, if the user does not have any owner ID, a new owner ID will be issued. The data obtaining section 11 forwards the image data and the notified user information thus obtained to the information managing server B, together with the owner ID.

### [Information Managing Server]

The information managing server B includes an image data managing section 21 for recording/managing the image data obtained from the receiving apparatus A at a data recording section HD comprised of a nonvolatile recording medium such as a hard disc and a notified user information managing section 22 for recording/managing the notified user information obtained from the receiving apparatus A at the data recording section HD.

The image data managing section 21 records the image data obtained by the data obtaining section 11 of the receiving apparatus A at the data recording section HD. Further, as described above, since the owner ID has been obtained from the data obtaining section 11 together with the image data, the image data managing section 21 manages the image data in correlation with the owner ID. With this, by using the owner ID as a "key", the image data of the owner having the owner ID can be searched. Incidentally, the image data managing section 21 manages each image data with addition of ID information ("image data ID" hereinafter) thereto, for the sake of convenience of management.

Similarly, the notified user information managing section 22 also records the notified user information obtained by the data obtaining section 11 of the receiving apparatus A at the image recording section HD and manages these notified user information, with allowing search thereof. Further, the notified user information managing section 22, upon receipt of the notified user information from the data obtaining section 11, assigns an identifier ("notified user ID" hereinafter) to each notified user and manages each notified user information and the owner ID in correlation with the notified information. With this, it is possible to search the owner ID with using the notified user ID as a key, or to search the notified user information with using the owner ID as a key.

In these ways, upon completion of the recording of the image data and the notified user information, this completion and the owner ID relating to these data are communicated from the information managing server B to the print controlling apparatus C.

### [Print Controlling Apparatus]

The print controlling apparatus C includes a notice print data generating section 31 for generating notice print data as source data for a notice print (to be detailed later) to be sent to the notified user whose data has been obtained by the data obtaining section 11 of the receiving apparatus A and an image print processing section 32 for effecting various image processing operations for image printing received by a receiving process to be described later.

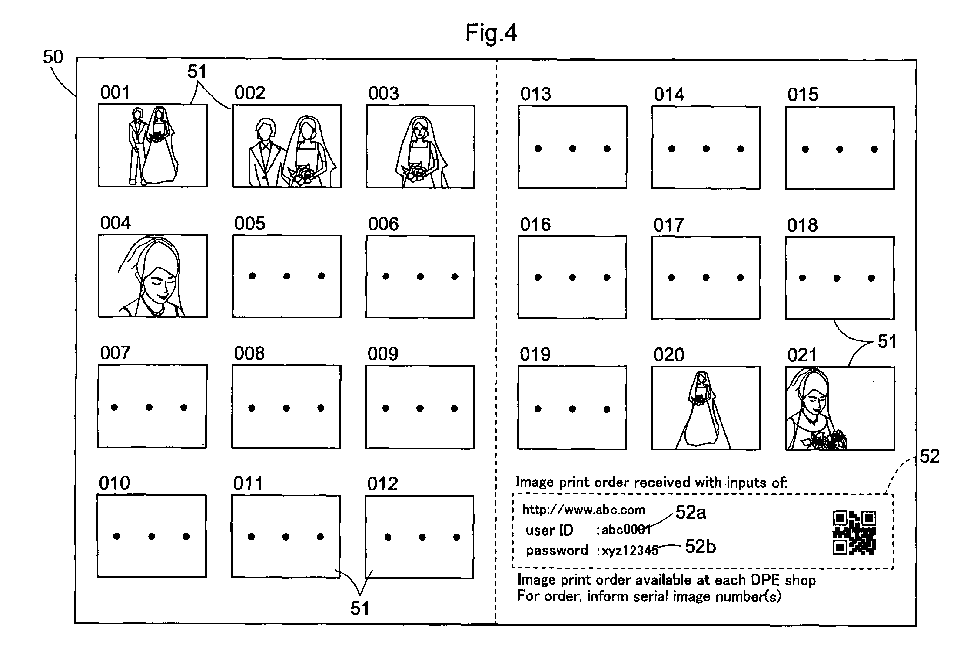

The notice print data generating section 31 generates notice print data. Figs. 3 and 4 show examples of the notice print in the present embodiment. As may be apparent from these figures, a notice print 50 is a printing medium such as a sheet of paper printed with thumbnail images 51 of at least some of the image data recorded and stored on the information managing server B and access information comprising e.g. information indicative of the address to access the image print order receiving server S to be described later. Incidentally, the language "thumbnail image" in the context of the present invention is intended to mean simply an image indicative of image data. Therefore, this can be not only a reduced size image, but also can be a same size or enlarged size image. And, the number of image can be single or plural. Further, as shown in the figure, the access information 52 can include a user ID 52a and a password 52b for use in authentication of the image print order receiving server S. With this, it is possible to prevent access by any unspecified user to the image print order receiving server S. In this case, the notified user information managing section 22 generates and stores the user ID and the password as the notified user information. These user ID and password can be different for respective notified users or can be same for notified users correlated to a single owner ID.

Further, the notice print 50 shown in Fig. 4 contains more thumbnail images 51 than the notice print shown in Fig. 3. Such notice print as this is suitable to be sent to a person who does not have internet connecting environment or connects to the internet by an instrument having only a small display screen such as a mobile phone. By viewing such notice print 50, the user can recognize images as candidates for image printing, without any connection to the internet. Further, as each thumbnail image 51 shows the image data ID of this image data, so the image ID of the image data for which an image print is desired can be used at the time of image print. Therefore, when a user places an order at a DPE shop for image print or the user places an order from an instrument with a small display screen such as a mobile phone, the image print order can be carried out in a stress-free manner. Further, for facilitating access from a mobile phone, the access information 62 in the notice print shown in Fig. 4,there is printed a 2-dimensional code representing the URL of the print order receiving server S.

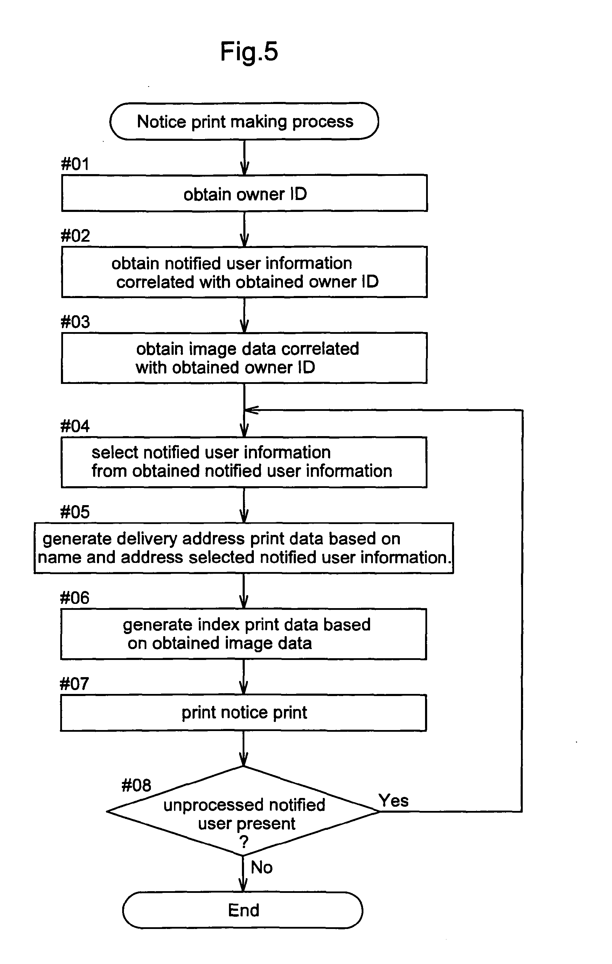

Next, the flow of the process for making a notice print will be explained with reference to the flowchart in Fig. 5. First, the information managing server B notifies the print controlling apparatus C of completion of recording of various kinds of data received at the receiving apparatus A and the owner ID (#01). In response to this, the print data generating section 31 of the print controlling apparatus C obtains notified user information correlated to the owner ID in order to generate a notice print (#02). Specifically, the notice print data generating section 31 requests, to the notified user information managing section 22, notified user information correlated to the obtained owner ID. As the notified user information managing section 22 stores each notified user information in correlation with an owner ID as described hereinbefore, the section 22 can obtain the notified user information correlated with this owner ID, with using the owner ID as a key. The notified user information obtained as above is returned from the notified user information managing section 22 to the notice print data generating section 31.

Further, the notice print data generating section 31 obtains image data correlated with the owner ID obtained from the image data managing section 21 (#03). Specifically, the notice print data generating section 31 requests, to the image data managing section 21, the image data correlated to the obtained owner ID. As the image data managing section 21 stores each image data in correlation with its owner ID as described above, the section 21 can obtain the image data correlated with this owner ID with using the owner ID as a key. The image data obtained as above is returned from the image data managing section 21 to the notice data generating section 31. Incidentally, in the above, the image data managing section 21 may return reduced image data of the image data recorded at the data recording section HD, rather than return this image data per se as it is.

In general, there exist a plurality of image data in correlation with one owner ID. On the other hand, there exists a limit in the number of images that can be contained in a single notice print. For this reason, when an image data request is sent from the notice print data generating section 31 to the image data managing section 21, the number of images required may be notified, so that the image data managing section 21 may return only the required number of images.

Further, when image data is received at the receiving apparatus A, the owner of the image data may specify the image data to be contained in the notice print, so that the image data generating section 21 may return this specified image data. This arrangement is advantageous in that the owner of the image data can print on the notice print, only images desired to be contained in this notice print. In this case, it is also possible to arrange such that the owner may specify a layout of the notice print, thus specifying the layout of each image as well.

The notice print data generating section 31 which has obtained image data and notified user information through the above-described process now selects one notified user information from the notified user information obtained from the notified user information managing section 22 (#04).

The notice print data generating section 31 generates, as address print data, image data made by rasterizing the name and the address contained in the notified user information of the selected notified user (#05). That is, this address print data is data indicative of the address to which the notice print is to be mailed.

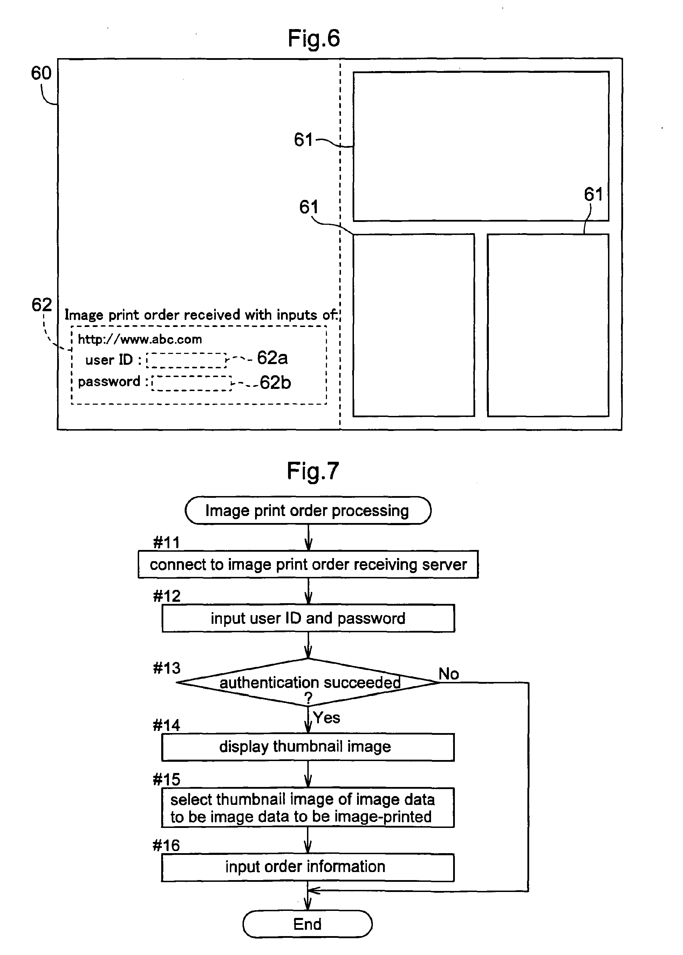

Further, the notice print data generating section 31 generates index print data, based on the image data obtained through the above-described process (#06). This index print data is image data for printing the notice print shown in Fig. 3 or 4. In the instant embodiment, the index print data is generated, with using, as its basis, a predetermined image template or an image template selected by the owner of the image data at the receiving apparatus A. As shown in Fig. 6, the template 60 in this embodiment includes a plurality of thumbnail image areas 61 and an access information area 62 for displaying e.g. the URL of the image print order receiving server S. Further, the access information area 62 includes a user ID area 62a and a password area 62b for displaying respectively a user ID and a password for use in authentication at the image print order receiving server S.

The notice print data generating section 31 effects a reducing operation for downsizing the obtained image data to be contained within the thumbnail image area 61 and generates single image data reduced to fit one thumbnail image area. Further, the notice print data generating section 31 rasterizes the URL, e.g. "http://www.abc.com/ ", of the image print order receiving server S and synthesizes this to the access information area 61. The notice print data generating section 31 rasterizes also the user ID, the password and synthesizes these to the user ID area 62a and the password area 62b, respectively.

The address print data and the index print data generated as above are sent to a printer P, which prints them on a printing medium such as a sheet of paper, thus making a notice print (#07). With this, there is made e.g. the notice print shown in Fig. 3. As described above, the notice print data generating section 31 and the printer P together constitute the "notice print making section" in the present invention.

The print data generating section 31 checks presence/absence of any un-processed notified user data (#08). If any un-processed notified user data is found, the process moves to the operation at #04 to carry out the above procedure.

In this embodiment, as the printing medium, the so-called pressure-bonded postcard is employed. The pressure-bonded postcard is a paper medium which is sized, when folded, to be equal to the standard postcard size. The (half) faces thereof which become the inner side when folded ("inner face" hereinafter) are releasably bonded to each other. If the index print data is printed on this inner face of the pressure-bonded postcard, even when the index print data contains a user ID and a password, these information can be protected once the postcard is folded and bonded. Further, with this pressure-bonded postcard, once its pressure-bonded face is detached, re-bonding thereof is difficult. Therefore, falsification of the contents and leak of the user ID, the password can be effectively prevented.

In the instant embodiment, there is employed a pressure-bonded postcard corresponding in size to two postcards, i.e. a single reply-paid postcard. Therefore, the printer P prints the index print data on one half face of the inner face of the pressure-bonded postcard and prints the address print data on the other half face thereof. The pressure-bonded postcard printed as above will then be folded and adhesively bonded either manually or by using an unillustrated machine so that the face printed with the index print data may be on the inner side. Incidentally, the size of the pressure-bonded postcard is not limited to the above-described size corresponding to two standard postcards, but can be a size of three standard postcards, etc. Any other size will do as long as the card, when folded, becomes the same size as the standard postcard.

Thanks to its size corresponding to the size of the standard postcard as described above, the notice print comprising the pressure-bonded postcard made through the above-described process can be mailed with the mailing cost of the standard postcard.

The notified user, who has received the above-described notice print, will detach the bonded face of the pressure-bonded postcard, so that the user can view its inner face printed with the index print data. The inner face of this pressure-bonded postcard is provided with a glare finish in the course of its adhesive bonding treatment. So, this notice print per se may be usable as an image print.

Further, if the notified user desires to place an order for image printing, the user will access the image print order receiving server S via a terminal T comprised of a general-purpose computer, a mobile phone, etc., so that the user can place the order. The terminal T can be a computer owned by the user himself/herself or a computer installed at a DPE shop for image print orders.

### [Image Print Order Receiving Server]

As shown in Fig. 2, the image print order receiving server S includes a user authenticating section 41 for authenticating the user who has made the access, an image data displaying section 42 for displaying image data, and an image print order receiving section 43 for receiving a user's order for image printing. In the instant embodiment, the image print order receiving server S is constructed as a WEB server and each functional section thereof is realized by a CGI (Common Gate Interface).

Fig. 7 shows a flowchart illustrating the flow of an image print order processing. First, the notified user who has received the notice print ("ordering user" hereinafter) makes an access to the URL shown in the notice print (#11). Upon receipt of an access request from the ordering user, the user authenticating section 41 of the image print order receiving server S requests a user ID and a password for authentication. In response to this, the ordering user inputs the user ID and the password shown in the notice print (#12).

Upon receipt of the inputs of the user ID and the password, the user authenticating section 41 verifies whether the user ID and the password obtained from the ordering user are valid or not (#13). Specifically, the section 41 transmits the obtained user ID and password to the notified user information managing section 22, which then checks whether the notified user ID corresponding to this user ID is registered or not. Further, if the notified user ID is found registered, the notified user information managing section 22 checks whether the password corresponding to this notified user ID matches the obtained password or not and then returns the result of this check. With this, if the user ID and password are determined valid (YES branching at #13), this fact, together with the user ID, is communicated to the image data displaying section 42. On the other hand, if at least one of the user ID and the password is determined invalid (NO branching at #13), then, the user authenticating section 41 cuts off the session and ends the process. In this case, alternatively, the section 41 may prompt inputs of the user ID and password again.

Upon receipt of report of success of authentication and the user ID from the user authenticating section 41, the image data displaying section 42 obtains image data to be displayed to the notified user having this user ID and causes a display (not shown) connected as a thumbnail image displaying screen to the terminal T to display these (#14). More particularly, the following operations are carried out.

The image data displaying section 42 requests the owner ID corresponding to the obtained user ID to the notified user information managing section 22 of the information managing server B. As described hereinbefore, the notified user information managing section 22 records and stores the user ID in correlation with the owner ID. Therefore, the owner ID can be searched, with using the notified user ID as a key. The owner ID searched in this way is then communicated from the notified user information managing section 22 to the image data displaying section 42.

Upon receipt of the owner ID, the image data displaying section 42 transmits this owner ID obtained from the notified user information managing section 22 to the image data managing section 21 of the information managing server B and requests image data correlated with this owner ID. As described above, since the image data managing section 21 stores and manages image data in correlation with user ID's, the image data correlated to this owner ID can be searched, with using the owner ID as a key. Then, the image data searched in this way is returned to the image data displaying section 42.

Upon receipt of the image data from the image data managing section 22, the image data displaying section 42 generates an HTML file in a predetermined format, comprising a plurality of thumbnail images of that image data laid side by side and transmits this file to the browser of the terminal T. Then, the browser of the terminal T displays the thumbnail images based on the obtained HTML file.

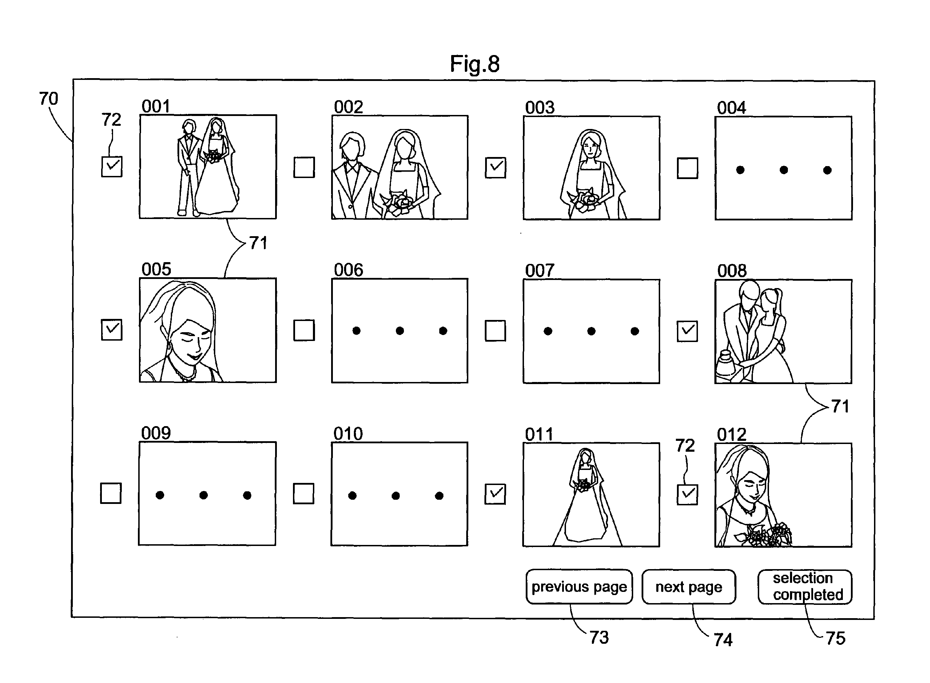

Fig. 8 shows a thumbnail image displaying screen 70 generated in the manner described above. The thumbnail image displaying screen 70 in this embodiment includes thumbnail image areas 71 for displaying thumbnail images of a plurality of image data, and image print check boxes 72 for showing image prints to be desired. This image print check box 72 is provided for each one of the thumbnail images. The ordering user will put a check mark in the image print check box 72 corresponding to the thumbnail image of the image data desired to be image-printed, by operating a pointing device (not shown) such as a mouse connected to the terminal T (#15). Incidentally, when there are too many image data obtained from the image data managing section 21 to be all displayed in a single thumbnail image displaying screen, a plurality of thumbnail image displaying screens 70 will be displayed. To this end, the thumbnail image displaying screen 70 has a previous page button 73 and a next page button 74 to move to the previous and next thumbnail image display screens 70, respectively.

When the ordering user has selected image data desired to be image-printed as described above and depressed a selection complete button 75 in the thumbnail image displaying screen 70, the image data ID of the selected image data and the user ID of the ordering user are reported to the image print order receiving section 43.

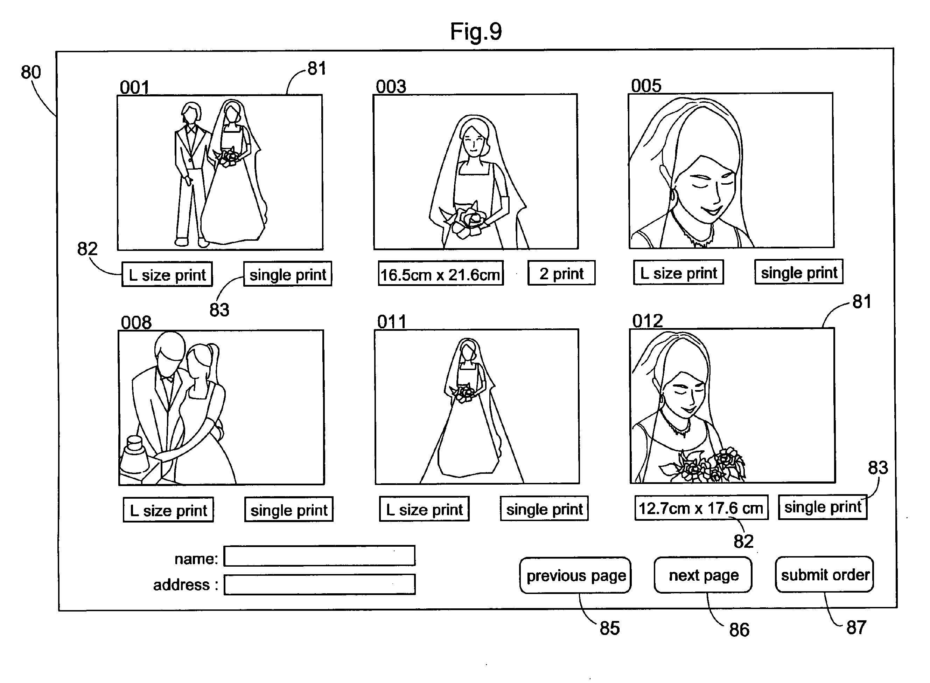

Upon receipt of the above report, the image print order receiving section 43 transmits an HTML file for image print order inputting screen to the browser of the terminal T so as to display a page that prompts input of order contents of image print on the display unit of the terminal T. In the instant embodiment, the order contents of image print comprise the size and the number of image print corresponding to each image data. Therefore, as shown in Fig. 9, the image print order inputting screen 80 in the instant embodiment includes thumbnail image areas 81 for displaying thumbnail images of the image data selected through the thumbnail image displaying screen 70, print size inputting boxes 82 and image print number inputting boxes 83 for allowing inputs of the size(s) and the number of the image print(s) corresponding to the respective image data. Advantageously, the image print size inputting box 82 and the image print number inputting box 83 are comprised of pull-down menu. Incidentally, the image print order inputting screen 80 may be provided with a function that allows input of a correction value of color hue or the like for each image data. In this case, this function can be realized with using the well-known prejudgment printing technique. Further, when the correction value of e.g. color hue of the image data is to be inputted, it may be arranged such that the thumbnail image selected by the user may be displayed with some enlargement. Further, it will be advantageous to arrange such that with each input of a correction value, image data corrected with this correction value may be displayed.

The number of the thumbnail image displaying areas 81 that can be contained in the image print order inputting screen 80 is limited (six in the case of the example shown). Therefore, like the thumbnail image displaying screen 70, the image print order inputting screen 80 also is provided with a previous page button 85 and a next page button 86 for moving to the previous or next image print order inputting screen.

Further, the image print order inputting screen 80 includes ordering user information inputting boxes 84 for allowing inputs of the name and address of the ordering user. The name and address inputted to these ordering user information inputting boxes 84 serve to clarify the ordering user of the image print and are utilized as address information used when the ordering use desires delivery of finished image prints. In this, if the image print order receiving section 43 obtains the name and address of the notified user corresponding to the user ID obtained from the notified user information managing section 22 at the time of user authentication as the initial values of the ordering user information inputting boxes 84, then, the ordering user's trouble of inputting the information can be eliminated. And, in this, if the ordering user desires to change the name/address, etc., the user may change such by operating the keyboard or the like.

The ordering user inputs order information through the image print order inputting screen 80 described above (#16). Thereafter, the user will press down an order submit button 87 in the image print order inputting screen 80,with using a mouse or the like connected to the terminal T. In this, the image data ID, the print size and print number of each image data, the name, address and so on of the ordering user will be transmitted as the order information, from the image print order receiving section 43 to the image print processing section 32 of the print controlling apparatus C. This completes the image print order input process.

Upon receipt of the order information described above, the image print processing section 32 generates image print data for image printing according to the order information and causes this image print data to be printed by the printer P. More particularly, the image print processing section 32 obtains the image data corresponding to the image data ID contained in the order information, from the image data managing section 21 of the information managing server B and then generates the image print data by the known technique. In this, if the order information contains a correction value of e.g. color hue correction, then, the processing section 32 will generate image print data reflecting such correction value. In this way, the image print processing section 32 and the printer P together constitute the "image printing section" in the present invention.

The image print data generated as described above will then be printed by the printer P and mailed to the address of the ordering user contained in the order information.

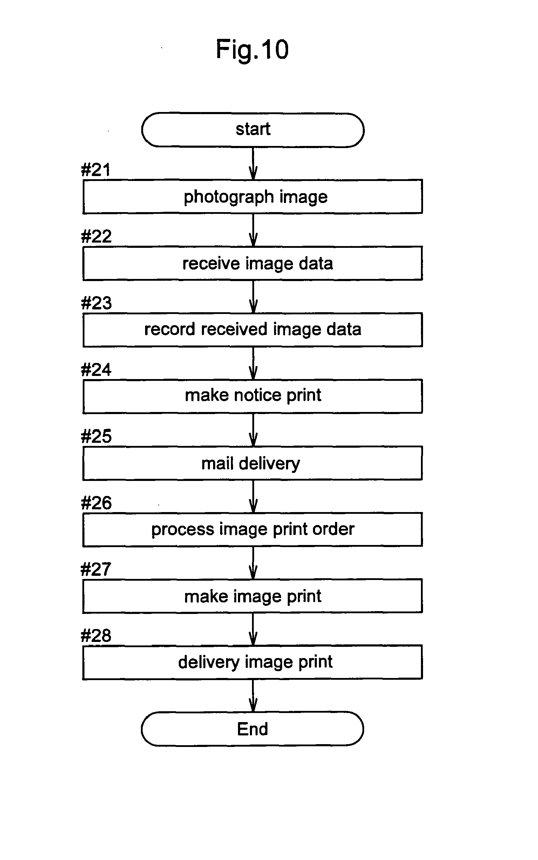

Fig. 10 shows a flow chart illustrating the flow of the entire processing by the image order receiving system according to the present invention. The following discussion will be made, based on an assumption that each one of attendees to a meeting or social gathering such as a wedding ceremony, an alumni reunion event, or the like (simply "meeting" hereinafter) is an owner of image data. First, in the meeting, an attendee photographs images, with using a digital camera, etc (#21).

Then, in order make the image data of the images photographed by each attendee as the subject of image print order, the attendee will effect a receiving process of the image data from the receiving apparatus A (#22). In this, it is advantageous and convenient at the time of placing image printing orders to arrange such that for all the attendees of a single meeting, a same owner ID is used. Therefore, preferably, an owner ID is issued to one attendee of the meeting attendees who first effects a receiving process or to a representative of the meeting, such as the meeting organizing person or company. In this, simultaneously, the receiving process will be carried out, using the names, mailing addresses, etc. of the meeting attendees as the notified user information.

The image data and the notified user information received at the receiving apparatus A are recorded and managed by the information managing server B (#23). Simultaneously, based on the notified user information, a notice print will be made by the print controlling apparatus C and the printer P (#24) and the notice print thus made will be mailed or delivered to each notified user (#25).

On the other hand, the notified user, upon receipt of the notice print, will detach the bonded face of this notice print, so that this user may view the index print printed on the inner face of the pressure-bonded postcard. By viewing this index print, the notified user will determine whether or not to make an image print. If an image print is desired, the notified user will make an access to the image print order receiving server S from the terminal T connected to the wide area network N, with using the URL of the image print order receiving server S shown in the notice print. Having accessed the image print order receiving server S, the notified user will carry out the above-described ordering process (#26).

The order contents will be sent as the order information from the image print order receiving server S to the print controlling apparatus C, wherein the image print processing section 32 carries out the above-described process and then the contents will be printed by the printer P (#27).

Each image print made as described above will then be mailed or delivered to the address of the notified user contained in the order information (#28).

### [Other Embodiments]

(1) In the foregoing embodiment, the image data are received from the receiving apparatus A via a recording medium a film, etc. Instead, the receiving apparatus A may be made public on the internet, so that the image data may be uploaded to the receiving apparatus via the internet.
(2) In the foregoing embodiment, each functional section is provided in a separate apparatus or unit. Instead, these may be provided in further separate apparatuses or in a single apparatus. In this way, the arrangements of the respective functional sections may vary appropriately, in consideration to the load of each apparatus or the network load, etc.
(3) In the foregoing embodiment, the number of thumbnail images to be contained in a notice print was fixed. Instead, this may be variable. For instance, the number of thumbnail images may be changed, depending on the property of the notified user. In this case, the notified user information will be caused to include the user's availability/non-availability of access to the internet, and a notice print to be sent to a notified user having no internet access will be caused to contain a greater number of thumbnail images whereas a notice print to be sent to a notified user having internet access will be caused to contain a fewer number of thumbnail images. Incidentally, preferably, the notice print to a user having no internet access will be caused to show the image data ID of the image data, together with the thumbnail images. With this, the notified user having received this notice print can make selection of image data for which image print order is to be placed, based on the thumbnail images of the notice print. Also preferably, in order to provide the service of receiving image print order based on the image data ID selected by such notified user, the DPE shop should install a terminal T that allows access to the image print order receiving server S.
(4) In the foregoing embodiment, the notice print is printed on a pressure-bonded postcard. The printing medium is not limited thereto. For instance, the index print data may be printed on a conventional print paper and the address print data may be printed on a conventional envelope, so that the notice print may be made in the form of a sealed matter. Needless to say, as long as the object of the present invention can be achieved, the printing medium can be changed.
(5) In the foregoing embodiment, one print controlling apparatus C was employed. Instead, a plurality of image printing businesses may be interconnected via the wide area network, with each image printing business installing a print controlling apparatus C and a printer. In this case, at the time of placing an image printing order, the ordering user can select also an image printing business to make image prints. For instance, the ordering user may select an image printing business capable of producing image prints of desired image quality or select an image printing business located nearby his/her residence or place of employment. Furthermore, other receiving apparatus A, information managing server B, printer P can be installed at each image printing business shop.

## Claims

1. An image print order receiving system having an image print order receiving apparatus (S) for receiving an order for printing images, the system comprising:
a data obtaining section (11) for obtaining image data for use in printing images;
a notice print making section (31, P) for printing, in a printing medium, a notice print (50) including thumbnail images of at least some of the image data and access information for accessing the image print order receiving apparatus; and
an image print order receiving section (43) provided in the image print order receiving apparatus (S), the image print order receiving section being configured to receive an access by a user who has received said notice print manually forwarded thereto and to obtain order information of the image prints.

2. The image print order receiving system according to claim 1, wherein said printing medium comprises a pressure-bonded postcard.

3. The image print order receiving system according to claim 1 or 2, wherein said access information includes a user ID and a password.

4. The image print order receiving system according to any one of claims 1-3, wherein said data obtaining section (11) further obtains user information including information of the delivery address of the user expected to place an image print order, and
said notice print making section (31, P) prints the delivery address of the user.

5. The image print order receiving system according to any one of claims 1-4, further comprising:
an image printing section (32, P) for making the image prints, based on said order information and said image data.

6. An image print order receiving method for receiving an order for printing images via a WEB page, the method comprising:
an image data obtaining step for obtaining image data for use in printing images;
a notice print making step for printing, in a printing medium, notice print including thumbnail images of at least some of the image data and access information for making an access to the WEB page; and
an image print order receiving step for receiving an access by a user who has received said notice print manually delivered thereto and obtaining order information of the image prints.
